Europäisches Patentamt

European Patent Office

Office européen des brevets

(19)

(11) Veröffentlichungsnummer: **0 203 546**
**A2**

(12) # EUROPÄISCHE PATENTANMELDUNG

(21) Anmeldenummer: **86107022.5**

(22) Anmeldetag: **23.05.86**

(51) Int. Cl.⁴: **B 62 L 1/16**

(30) Priorität: **25.05.85 DE 3518992**

(43) Veröffentlichungstag der Anmeldung: **03.12.86**
**Patentblatt 86/49**

(84) Benannte Vertragsstaaten: **AT BE CH DE FR GB IT LI NL SE**

(71) Anmelder: **Altenburger GmbH & Co. KG, Postfach 1148, D-7893 Jestetten - 1 (DE)**

(72) Erfinder: **v.d. Osten-Sacken, E., Prof. Dr.-Ing., Grünepleistrasse 37, D-5106 Roetgen (DE)**
Erfinder: **Schuchard, Klaus, Herstalerstrasse 11, D-5100 Aachen (DE)**

(74) Vertreter: **Eder, Eugen, Dipl.-Ing. et al, Patentanwälte Dipl.-Ing. E. Eder Dipl.-Ing. K. Schieschke Elisabethstrasse 34, D-8000 München 40 (DE)**

(54) **Felgenbremse für Zweiräder und insbesondere Fahrräder.**

(57) Die Erfindung betrifft eine Felgenbremse für Zweiräder und insbesondere Fahrräder, welche zwei drehbar gelagerte Bremsarme mit je einem einen Bremsklotz tragenden Bremsschenkel sowie je einem sich diesem gegenüber in entgegengesetzter Richtung erstreckenden Betätigungsschenkel und Mittel zur Betätigung dieser Bremsarme aufweist.

Bei der neuen Felgenbremse ist vorgesehen, dass einer der Bremsarme (erster Bremsarm) frei drehbar um einen Drehpunkt an dem Vorderradgabelkopf oder dem Rahmenhinterbau gelagert ist, dass der andere Bremsarm (zweiter Bremsarm) mit Abstand von dem Drehpunkt des ersten Bremsarmes eine drehbare Lagerung um einen Drehpunkt an dessen Betätigungsschenkel hat und dass die von den Betätigungsmitteln ausgeübte Betätigungskraft an dem Betätigungsschenkel des zweiten Bremsarms angreift. Hierdurch wird vor allem erreicht, dass die neue Felgenbremse für Zweiräder mit allen Reifengrössen mit dem gleichen Hebelverhältnis gebaut werden kann, ohne dass sie seitlich zu ausladend wird.

Felgenbremse für Zweiräder und insbesondere Fahrräder

Die Erfindung betrifft eine Felgenbremse für Zweiräder und insbesondere Fahrräder, welche zwei drehbar gelagerte Bremsarme mit je einem einen Bremsklotz tragenden Bremsschenkel sowie je einem sich diesem gegenüber in entgegengesetzter Richtung erstreckenden Betätigungsschenkel und Mittel zur Betätigung dieser Bremsarme aufweist.

Felgenbremsen für Zweiräder und insbesondere Fahrräder sind seit langem bekannt und werden als sogenannte Seitenzugbremsen sowie Mittelzugbremsen ausgeführt.

Die Seitenzugbremsen weisen zwei Bremsarme auf, welche um einen gemeinsamen Drehpunkt an dem Vorderradgabelkopf oder dem Rahmenhinterbau drehbar gelagert sind. Einer dieser Bremsarme hat einen Bremsschenkel mit einem Bremsklotz sowie einen sich diesem gegenüber in entgegengesetzter seitlicher Richtung erstreckenden Betätigungsschenkel. Der andere Bremsarm weist nur einen Schenkel auf, der an seinem freien Ende mit einem Bremsklotz versehen ist und in seinem mittleren Bereich einen Betätigungsvorsprung besitzt, welcher sich schräg nach oben und dabei in der gleichen seitlichen Richtung wie der Betätigungsschenkel des zweischenkligen Bremsarmes erstreckt. Die Betätigung der Seitenzugbremsen erfolgt durch Betätigungsmittel, wie einen Bowdenzug, dessen Teile seitlich von dem einschenkligen Bremsarm mit dem äußeren Ende des Betätigungsschenkels des zweischenkligen Bremsarmes und dem äußeren Ende des Betätigungsvorsprunges des einschenkligen Bremsarmes in Verbindung stehen. Zur Rückstellung der Bremsarme in ihre Ausgangslage sind auf diese wirkende Rückstellfedern vorgesehen.

Die Mittelzugbremsen haben zwei Bremsarme mit je einem einen Bremsklotz tragenden Bremsschenkel sowie je einen sich diesem gegenüber in entgegengesetzter Richtung erstreckenden Betätigungsschenkel. Diese beiden Bremsarme sind jedoch nicht um einen gemeinsamen Drehpunkt an dem Vorderradgabelkopf oder dem Rahmenhinterbau gelagert. Vielmehr weisen sie an diesen eine drehbare Lagerung um zwei verschiedene Drehpunkte auf, die sich in gleicher Höhe mit seitlichem Abstand voneinander befinden. Zur Lagerung der beiden Bremsarme dient eine Lagerplatte, die ihrerseits an dem Vorderradgabelkopf oder dem Rahmenhinterbau befestigt ist. Die Betätigung der Mittelzugbremsen erfolgt ebenfalls durch Betätigungsmittel, wie einen Bowdenzug. Hierzu stehen bei Verwendung eines Bowdenzuges die Enden der Betätigungsschenkel der Bremsarme mit dem mittig über ihnen angeordneten Zugseil des Bowdenzuges in Verbindung, während sich dessen Hülle an Teilen abstützt, die an der Vorderradgabel, dem Rahmenhinterbau oder dem Rahmen befestigt sind. Um die Bremsarme in ihre Ausgangsstellung zurückzustellen, sind gleichfalls auf diese wirkende Rückstellfedern vorgesehen.

Die Bremswirkung von mechanischen Zweiradfelgenbremsen, wie den beschriebenen Seitenzugbremsen und Mittelzugbremsen, ist einerseits davon abhängig, wie groß deren Hebelverhältnis (i Bremse) ist. Zum anderen hängt die Bremswirkung von mechanischen Zweiradfelgenbremsen von dem Hebelverhältnis (i Hebel) ab, das die zur Betätigung dieser Bremsen üblicherweise verwendeten an der Lenkstange angebrachten Handbremshebel aufweisen. Für die tatsächlich ausgeübte Bremswirkung ist daher das Gesamtübersetzungsverhältnis (i gesamt) gemäß der Formel

i gesamt = i Bremse x i Hebel

bestimmend.

Da alle mechanischen Bauteile von Handhebelbremsen elastischen Verformungen unterliegen, kann man bei den auf dem Markt befindlichen Handhebelbremsen den Handhebel bis zum Anschlag gegen den Lenker durchziehen, ohne daß die maximal mögliche Verzögerung der mit den Bremsen ausgerüsteten Zweiräder erreicht wird. Bei Anwendung einer extrem steifen Bremsenkonstruktion wäre es dagegen durch entsprechendes Erhöhen des Gesamtübersetzungsverhältnisses möglich, jede gewünschte Bremswirkung zu erreichen. Einem derartigen Vorgehen sind jedoch aus Material-, Gewichts- und Kostengründen Grenzen gesetzt.

Will man die Bremswirkung von durch Handbremshebel betätigten Zweiradfelgenbremsen verbessern, ist es demnach zwingend erforderlich, das Hebelverhältnis der Bremse (i Bremse) und nicht das Hebelverhältnis des Handbremshebels (i Hebel) zu erhöhen. Bei einem entsprechenden Vorgehen braucht man nur die von den Bremsarmen gebildete Bremszange steif auszulegen, da der Bremszug und der Handbremshebel nicht den höheren Kräften unterliegen, die in der Bremszange herrschen.

Das Hebelverhältnis von Felgenbremsen hängt von dem Abstand a zwischen dem Drehpunkt der Bremsarme und dem Angriffspunkt der Betätigungskraft an diesen sowie dem Abstand b zwischen dem Drehpunkt der Bremsarme und dem Angriffspunkt ihrer Bremsklötze an der Radfelge ab und bestimmt sich nach der Formel

$$i \text{ Bremse} = \frac{a}{b}$$

Bei den bekannten Seitenzugbremsen hängt die Größe des Abstandes b von dem Reifendurchmesser der Zweiräder, für welche sie vorgesehen sind, ab. Haben die Reifen dieser Räder einen großen Durchmesser, so muß der Abstand b entsprechend groß bemessen werden. Um trotzdem das Hebelverhältnis der Bremse (i Bremse) konstant zu halten, müßte eine entsprechende Vergrößerung des Abstandes a erfolgen. Hierdurch würden bei Zweirädern mit dicken Reifen, wie beispielsweise den sogenannten Hollandrädern, die Seitenzugbremsen in seitlicher Richtung zu ausladend. Um diesen Nachteil zu vermeiden, werden von Fahrradherstellern vielfach Seitenzugbremsen mit ungünstigen Hebelverhältnissen verwendet. Die Folge davon ist eine sehr schlechte Bremswirkung.

Mit Mittelzugbremsen läßt sich der geschilderte Nachteil vermeiden, da es bei diesen möglich ist, die Abstände a und b zu vergrößern. Ohne daß sie hierdurch in seitlicher Richtung zu ausladend werden. Insbesondere wegen der bei ihnen erforderlichen Lagerplatte für die Bremsarme erfordern Mittelzugbremsen jedoch einen wesentlich höheren baulichen Aufwand als Seitenzugbremsen und sind entsprechend teurer. Infolgedessen werden Mittelzugbremsen bisher lediglich in verhältnismäßig geringem Umfange, und zwar meistens nur bei teuren Zweirädern, angewendet.

Der Erfindung liegt die Aufgabe zugrunde, eine Felgenbremse für Zweiräder und insbesondere Fahrräder zu schaffen, welche die Nachteile der bekannten Seitenzugbremsen und Mittelzugbremsen nicht aufweist.

Zur Lösung dieser Aufgabe sieht die Erfindung eine Felgenbremse der eingangs genannten Art vor, welche sich in erster Linie dadurch kennzeichnet, daß einer der Bremsarme (erster Bremsarm) frei drehbar um einen Drehpunkt an dem Vorderradgabelkopf oder dem Rahmenhinterbau gelagert ist, daß der andere Bremsarm (zweiter Bremsarm) mit Abstand von dem Drehpunkt des ersten Bremsarmes eine drehbare Lagerung um einen Drehpunkt an dessen Betätigungsschenkel hat und daß die von den Betätigungsmitteln ausgeübte Betätigungskraft an dem Betätigungsschenkel des zweiten Bremsarms angreift.

Infolge der Ausbildung sowie Lagerung ihrer Bremsarme kann die neue Felgenbremse für Zweiräder mit allen Reifengrößen mit dem gleichen Hebelverhältnis gebaut werden, ohne daß sie seitlich zu ausladend wird. Zur Anpassung an Zweiräder mit dickeren Reifen ist es bei dieser Felgenbremse nämlich ohne weiteres möglich, sowohl die Bremsschenkel ihrer Bremarme als auch die Betätigungsschenkel derselben in dem erforderlichen Maße zu verlängern, ohne daß die Betätigungsschenkel über den Bremsenbereich hinaus seitlich vorspringen. Ferner läßt sich die neue Felgenbremse billiger als die bekannten Mittelzugbremsen herstellen, und zwar vor allem, da bei ihr keine zusätzliche Befestigungsplatte für die Lagerung der Bremsarme erforderlich ist.

Auch wenn bei der neuen Felgenbremse die von den Betätigungsmitteln für diese ausgeübte Betätigungskraft nur an dem Betätigungsschenkel des zweiten Bremsarms angreift, so werden von den beiden Bremsarmen bzw. ihren Bremsklötzen doch die gleichen Bremskräfte auf die Radfelgen ausgeübt. Daß dem so ist, beruht darauf, daß infolge der Ausbildung und Lagerung der beiden Bremsarme die auf den Betätigungsschenkel des zweiten Bremsarms ausgeübte Betätigungskraft auf den Betätigungsschenkel des ersten Bremsarms übertragen wird. Ferner hat dies seinen Grund darin, daß für die von den Bremsarmen bzw. deren Bremsklötzen ausgeübten Bremskräfte auch das Prinzip Kraft = Gegenkraft gilt.

Erfindungsgemäß ist bei der neuen Felgenbremse weiter vorgesehen, daß für die Bremsenrückstellung lediglich eine Rückstellfeder zwischen dem ersten Bremsarm und dem zweiten Bremsarm angeordnet ist. In Verbindung mit der frei drehbaren Lagerung des ersten Bremsarmes ergibt sich hierdurch eine Selbstzentrierung der neuen Bremse, und zwar in der Weise, daß nach der Rückstellung der Bremsarme durch die Rückstellfeder die Bremsklötze erforderlichenfalls von der sich drehenden Radfelge, die in aller Regel einen gewissen Seitenschlag hat, so in eine Ruhestellung bewegt werden, daß ein Schleifen derselben vermieden wird.

Weitere vorteilhafte Ausgestaltungen sowie Ausführungsformen der erfindungsgemäßen Felgenbremse ergeben sich aus den Unteransprüchen. Abgesehen davon sind jedoch auch noch andere Ausführungsformen derselben möglich.

In den Zeichnungen sind bekannte Zweiradfelgenbremsen sowie zwei Ausführungsformen der erfindungsgemäßen Zweiradfelgenbremse veranschaulicht, und zwar zeigen:

Fig. 1    eine Seitenzugbremse in Vorderansicht;

Fig. 2    eine Mittelzugbremse in Vorderansicht;

Fig. 3    eine Ausführungsform der neuen Bremse sowie einen Teil des von dieser zu bremsenden Rades, teils in Vorderansicht und teils im Querschnitt, und

Fig. 4    eine andere Ausführungsform der neuen Bremse und einen Teil des von dieser zu bremsenden Rades, teils in Seitenansicht und teils im Querschnitt.

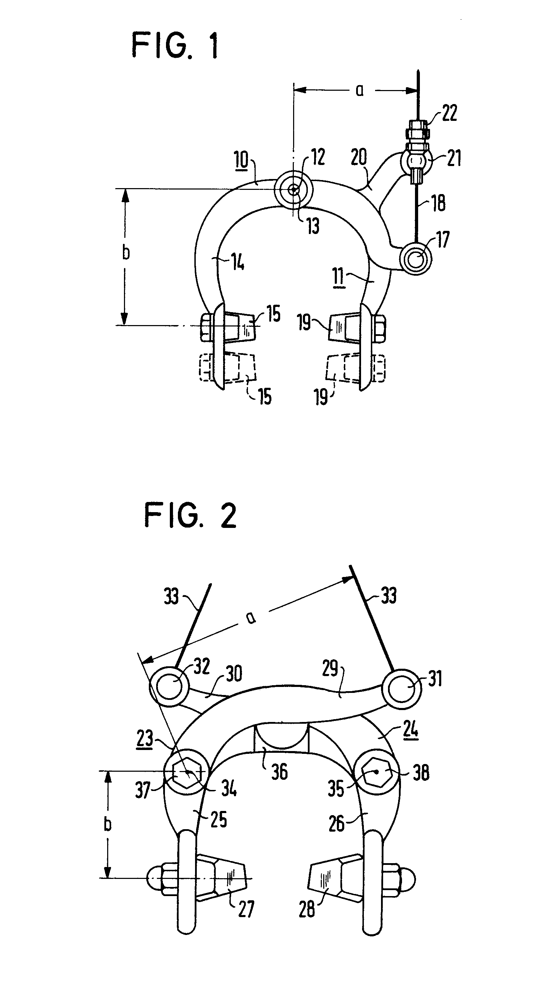

Die in Fig. 1 dargestellte Seitenzugbremse weist einen zweischenkligen Bremsarm 10 sowie einen einschenkligen Bremsarm 11 auf. Die beiden Bremsarme 10, 11 sind um einen gemeinsamen Drehpunkt 12 an dem Vorderradgabelkopf oder dem Rahmenhinterbau, welche jedoch nicht dargestellt sind, drehbar gelagert. Hierzu weisen der Bremsarm 10 eine mittlere Lageröffnung sowie der Bremarm 11 eine an seinem oberen Ende befindliche Lageröffnung auf, durch welche ein Lagerbolzen 13 geführt ist.

Der zweischenklige Bremsarm 10 besitzt einen Bremsschenkel 14, der an seinem unteren Ende ein Langloch zur Befestigung eines Bremsklotzes 15 aufweist. Die Zeichnung zeigt den Bremsklotz 15 in voll ausgezogenen Linien bei Befestigung an der oberen Öffnung und in gestrichelten Linien bei Befestigung an der unteren Öffnung. Weiterhin besitzt der Bremsarm 10 einen Betätigungsschenkel 16, der sich dem Bremsschenkel 14 gegenüber in entgegengesetzter seitlicher Richtung erstreckt. An seinem äußeren Ende ist der Betätigungsschenkel 16 mit einer Öffnung sowie einer sich durch diese erstreckenden Schraube 17 zur Befestigung des Zugseiles 18 eines Bowdenzuges versehen.

Der Bremsarm 11 weist lediglich einen Schenkel auf, der dem Bremsschenkel 14 des Bremsarms 10 entsprechend gestaltet ist und an seinem unteren Ende ebenfalls mit zwei in Abstand voneinander befindlichen Öffnungen zur Befestigung eines Bremsklotzes 19 versehen ist. In einem mittleren Bereich ist der Bremsarm 11 mit seinem Vorsprung 20 versehen, welcher sich schräg nach oben und dabei in der gleichen seitlichen Richtung wie der Betätigungsschenkel 16 des Bremsarms 10 erstreckt. Der Vorsprung 20 ist an seinem äußeren Ende so gestaltet, daß er ein Widerlager 21 für die Hülle 22 des Bowdenzuges bildet sowie einen Durchtritt des Zugseils 18 desselben gestattet.

Das Hebelverhältnis der Seitenzugbremse bestimmt sich gemäß der bereits genannten Formel durch die in Fig. 1 dargestellten Abstände a und b zwischen dem Drehpunkt 12 und den Angriffspunkten des Zugseils 18 sowie der Hülle 22 des Bowdenzuges einerseits und dem Angriffspunkt der Bremsklötze 15, 19 an der Felge eines nicht dargestellten Rades andererseits.

Die in Fig. 2 gezeigte Mittelzugbremse weist zwei gleich gestaltete Bremsarme 23, 24 auf. Jeder dieser Bremsarme 23, 24 besitzt einen Bremsschenkel 25, 26, an dessen unterem Ende ein Bremsklotz 27, 28 befstigt ist. Ferner hat jeder der Bremsarme 23, 24 einen sich in entgegengesetzter Richtung zu seinem Bremschenkel 25, 26 erstreckenden Betätigungsschenkel 29, 30. Die beiden Betätigungsschenkel 29, 30 sind an ihrem äußeren Ende mit je einer Öffnung sowie einer Schraube 31, 32 zur Befestigung eines Verbindungsseils 33 versehen, das zur Verbindung mit dem Zugseil eines nicht dargestellten Bowdenzuges dient.

Die beiden Bremsarme 23, 24 sind um die Drehpunkte 34, 35, die sich in gleicher Höhe mit seitlichem Abstand voneinander befinden, drehbar an einer Lagerplatte 36 gelagert. Hierzu weisen sie entsprechende, nicht dargestellte Lageröffnungen auf. Ferner sind hierzu Lagerbolzen 37, 38 vorgesehen. Mittels der Befestigungsplatte 36 ist die Bremse an dem Vorderradgabelkopf oder dem Rahmenhinterbau, was jedoch nicht dargestellt ist, befestigt.

Das Hebelverhältnis der Mittelzugbremse bestimmt sich entsprechend der bereits genannten Formel durch die in Fig. 2 dargestellten Abstände a, b zwischen dem Drehpunkt 34, 35 jedes Bremsarmes 23, 24 und dem Befestigungspunkt des Zwischenseils 33 an dem äußeren Ende seines Betätigungsschenkels 29, 30 einerseits sowie dem Angriffspunkt der Bremsklötze 27, 28 an der Felge eines nicht dargestellten Rades andererseits.

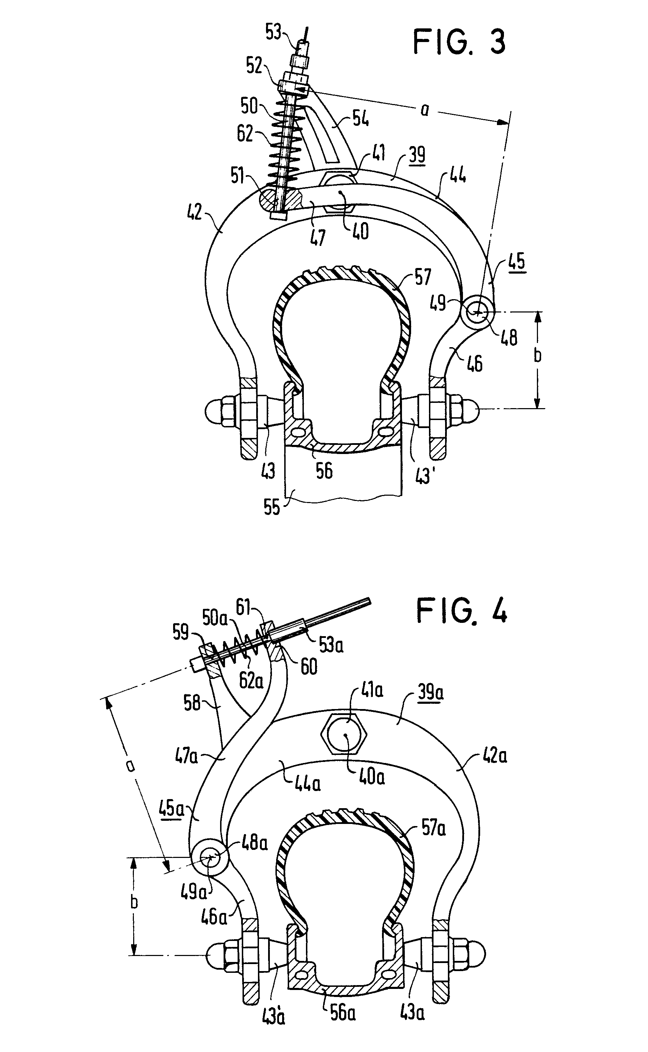

Bei der in Fig. 3 dargestellten Ausführungsform der neuen Bremse ist ein erster zweischenkliger Bremsarm 39 um einen Drehpunkt 40 frei drehbar an dem Vorderradgabelkopf oder dem Rahmenhinterbau, welche jedoch nicht dargestellt sind, gelagert. Hierzu weist er eine entsprechende Lageröffnung auf. Ferner ist hierzu ein Lagerbolzen 41 vorgesehen. Der Bremsarm 39 besitzt einen Bremsschenkel 42, an dessen unterem Ende ein Bremsklotz 43 befestigt ist. Ferner hat er einen sich dem Bremsschenkel 42 gegenüber in entgegengesetzter Richtung erstreckenden Betätigungschenkel 44, der an seinem äußeren Ende mit einer Lageröffnung versehen ist.

Die Bremse besitzt einen zweiten Bremsarm 45. Dieser hat ebenfalls einen Bremsschenkel 46, an dessen unterem Ende ein Bremsklotz 43' angeordnet ist, sowie einen sich dem Bremsschenkel 46 gegenüber in entgegengesetzter Richtung erstreckenden Betätigungsschenkel 47. Der Bremsarm 45 weist an seinem mittleren Bereich eine Lageröffnung auf und ist mittels eines Lagerbolzens 48, der sich durch diese Lageröffnung und die Lageröffnung am Ende des Betätigungsschenkels 44 des Bremsarms 39 erstreckt, um einen Drehpunkt 49 drehbar.

Zur Betätigung der Bremse ist ein Bowdenzug vorgesehen. Das Zugseil 50 dieses Bowdenzuges steht mit dem äußeren Ende des Betätigungsschenkels 47 des zweiten Bremsarmes 45 in Verbindung, welches hierzu mit einer entsprechenden Öffnung 51 versehen ist. Um ein Widerlager 52 für die Hülle 53 des Bowdenzuges zu bilden, ist ein Halter 54 vorgesehen, welcher an dem ersten Bremsarm 39 befestigt ist.

Fig. 3 zeigt abgesehen von der Bremse schematisch ein von dieser zu bremsendes Rad 55 mit einer Felge 56 sowie einem Reifen 57.

Bei Betätigung der Bremse durch den Bowdenzug zwecks Ausübung einer Bremswirkung auf das Rad 55 wird der Betätigungsschenkel 47 des zweiten Bremsarms 45 von dem Zugseil 50 des Bowdenzuges hochgezogen. Dies hat einerseits ein Schwenken des Bremsarmes 45 im Gegenuhrzeigersinne um seinen Drehpunkt 49 und damit ein Andrücken seines Bremsklotzes 43' gegen die Radfelge 56 zur Folge. Zum anderen bewirkt dies eine Aufwärtsbewegung des Bremsarmes 45 und infolgedessen eine Drehbewegung des ersten Bremsarmes 39 um seinen Drehpunkt 40 im Uhrzeigersinne mit der Folge, daß auch der Bremsklotz 43 des Bremsarmes 39 gegen die Radfelge 56 angedrückt wird.

Bei der Bremse ist im übrigen noch die Rückstellfeder 62 vorgesehen, um die beiden Bremsarme 39, 45 bei Freigabe bzw. Nichtbetätigung des Bowdenzuges in ihre Ausgangsstellung zurückzubewegen und in dieser zu halten.

Die Druckfeder 62 ist das Zugseil 50 des Bowdenzuges umgebend zwischen dem äußeren Ende des Betätigungsschenkels 47 des zweiten Bremsarmes 45 und dem von dem Halter 54 gebildeten Widerlager 52 angeordnet.

Das Hebelverhältnis der Bremse bestimmt sich entsprechend der bereits zitierten Formel durch die in Fig. 3 dargestellten Abstände a und b zwischen dem Drehpunkt 49 des zweiten Bremsarmes 45 und dem äußeren Ende seines Betätigungsschenkels 47 einerseits sowie dem Angriffspunkt seiner Bremsklötze 43', 43 an der Radfelge 56 andererseits.

Die Ausbildung und Anordung der Ausführungsform der neuen Bremse gemäß Fig. 4 stimmt mit derjenigen der Fig. 3 in vieler Hinsicht überein. Diejenigen Teile der in Fig. 4 dargestellten Bremse, welche denjenigen der Bremse der Fig.3 entsprechen, sind daher mit gleichen Bezugszahlen versehen, allerdings mit Beifügung des Buchstabens a. Ferner wurden dementsprechend die gleichen durch den Buchstaben a ergänzten Bezugszahlen wie in Fig. 3 für das in Fig. 4 dargestellte Rad gewählt.

Bei dieser Bremse weist jedoch der Betätigungsschenkel 44a des ersten Bremsarmes 39a zwischen dessen Drehpunkt 40a und dem Drehpunkt 49a des zweiten Bremsarmes 45a einen Vorsprung 58 auf, der im wesentlichen nach oben gerichtet ist. Ferner erstreckt sich der Betätigungsschenkel 47a des zweiten Bremsarmes 45a schräg zur Seite sowie nach oben und endet an einer Stelle, die sich in Abstand von dem äußeren Ende des Vorsprunges 58 befindet.

Zur Betätigung der Bremse ist ein Bowdenzug vorgesehen. Für die Befestigung des Zugseils 50a desselben weist der Vorsprung 58 an seinem äußeren Ende eine Öffnung 59 auf. Ferner ist das äußere Ende des Betätigungsschenkels 47a des Bremsarms 45a als Widerlager 60 für die Hülle 53a des Bowdenzuges ausgebildet und weist eine Öffnung 61 für den Durchtritt des Zugseils 50a desselben auf. Zwischen den äußeren Enden des Vorsprunges 58 und des Betätigungsschenkels 47a ist das Zugseil 50a des Bowdenzuges umgebend eine Druckfeder 62a angeordnet. Durch die Druckfeder 62a werden die Bremsarme 39a, 45a in ihrer Ausgangsstellung gehalten und nach Betätigung der Bremse mittels des Bowdenzuges in dieser zurückgestellt.

Bei einer Betätigung der Bremse durch den Bowdenzug ergeben sich hinsichtlich der Bremsarme 39a, 45a Bewegungsverhältnisse, welche im wesentlichen denjenigen entsprechen, die im Zusammenhang mit der in Fig. 3 dargestellten Bremse bereits beschrieben worden sind.

Das Hebelverhältnis der Bremse bestimmt sich entsprechend der bereits zitierten Formel durch die in Fig. 4 dargestellten Abstände a und b zwischen dem Drehpunkt 49a des Bremsarms 45a und den Verbindungspunkten des Zugseils 50a sowie der Hülle 53a des Bowdenzugs mit den äußeren Enden des Vorsprunges 58 und Bremsarmschenkels 47a einerseits sowie dem Angriffspunkt der Bremsklötze 43'a, 43a an der Radfelge 56a andererseits.

Aus den Fig. 3 und 4 ist ersichtlich, daß es bei der neuen Bremse durch entsprechende Gestaltung und Anordnung ihrer Teile ohne weiteres möglich ist, den Abstand a zu vergrössern, und zwar ohne daß die Bremse hierdurch seitlich zu ausladend wird, wenn der Abstand b zur Anpassung an Räder mit dickeren Reifen größer gewählt werden muß. Infolgedessen kann die neue Bremse auch für alle Anwendungsfälle mit einem günstigen Hebelverhältnis ausgebildet werden.

Abgesehen davon zeigen die Zeichnungen auch, daß für die neue Bremse nicht mehr Teile als für die bekannten Seitenzugbremsen benötigt werden, was sich dahingehend auswirkt, daß die neue Bremse im Verhältnis zu den bekannten Mittelzugbremsen preiswerter hergestellt werden kann.

Patentansprüche

1. Felgenbremse für Zweiräder und insbesondere Fahrräder, welche zwei drehbar gelagerte Bremsarme mit je einem einen Bremsklotz tragenden Bremsschenkel sowie je einem sich diesem gegenüber in entgegengesetzter Richtung erstreckenden Betätigungsschenkel und Mittel zur Betätigung dieser Bremsarme aufweist, dadurch gekennzeichnet, daß einer der Bremsarme (39; 39a) (erster Bremsarm) frei drehbar um einen Drehpunkt (40; 40a) an dem Vorderradgabelkopf oder dem Rahmenhinterbau gelagert ist, daß der andere Bremsarm (45; 45a) (zweiter Bremsarm) mit Abstand von dem Drehpunkt (40; 40a) des ersten Bremsarms (39; 39a) eine drehbare Lagerung um einen Drehpunkt (49; 49a) an dessen Betätigungsschenkel(44; 44a) hat und daß die von den Betätigungsmitteln (50; 53; 50a, 53a) ausgeübte Betätigungskraft an dem Betätigungschenkel (47; 47a) des zweiten Bremsarmes (45; 45a) angreift.

2. Felgenbremse nach Anspruch 1, dadurch gekennzeichnet, daß für die Bremsenrückstellung lediglich eine Rückstellfeder (62; 62a) zwischen dem ersten Bremsarm (39; 39a) und dem zweiten Bremsarm (45; 45a) angeordnet ist.

3. Felgenbremse nach Anspruch 2, dadurch gekennzeichent, daß sich die drehbare Lagerung (48; 48a) des zweiten Bremsarmes (45; 45a) an dem äußeren Ende des Betätigungsschenkels (44; 44a) des ersten Bremsarmes (39; 39a) befindet.

4. Felgenbremse nach einem der Ansprüche 1 bis 3, dadurch gekennzeichnet, daß der Betätigungsschenkel (44a) des ersten Bremsarms (39a) zwischen den beiden Drehpunkten (40a, 49a) einen im wesentlichen nach oben gerichteten Vorsprung (58) aufweist, welcher als Widerlager für die an dem Betätigungsschenkel (47a) des zweiten Bremsarmes (45a) angreifende Betätigungskraft dient.

5. Felgenbremse nach Anspruch 4, dadurch gekennzeichnet, daß zwischen dem Vorsprung (58) des Betätigungsschenkels (44a) des ersten Bremsarmes (39a) und dem Betätigungsschenkel (47a) des zweiten Bremsarmes (45a) eine Druckfeder (62a) angeordnet ist.

6. Felgenbremse nach einem der Ansprüche 4 und 5, dadurch gekennzeichnet, daß bei Verwendung eines Bowdenzuges als Betätigungsmittel dessen Zugseil (50a) mit dem Vorsprung (58) des Betätigungsschenkels (44a) des ersten Bremsarmes (39a) verbunden ist, während sich seine Hülle (53a) an dem Betätigungsschenkel (47a) des zweiten Bremsarmes (45a) abstützt oder umgekehrt sein Zugseil mit dem Betätigungsschenkel des zweiten Bremsarmes verbunden ist und seine Hülle sich an dem Vorsprung des Betätigungsschenkels des ersten Bremsarmes abstützt.

7. Felgenbremse nach einem der Ansprüche 1 bis 3, dadurch gekennzeichnet, daß bei Verwendung eines Bowdenzuges als Betätigungsmittel dessen Zugseil (50) mit dem Betätigungsschenkel (47) des zweiten Bremsarms (45) verbunden ist und sich seine Hülle (53) an mit dem ersten Bremsarm (39) in Verbindung stehenden Teilen (52, 54) abstützt oder umgekehrt sein Zugseil mit an dem ersten Bremsarm (39) angeordneten Teilen verbunden ist, während seine Hülle sich an dem Betätigungsschenkel des zweiten Bremsarmes abstützt.

8. Felgenbremse nach Anspruch 7, dadurch gekennzeichent, daß zwischen dem Betätigungsschenkel (47) des zweiten Bremsarms (45) und den zur Abstützung des Bowdenzuges dienenden Teilen (52, 54) eine Druckfeder (62) das Zugseil (50) des Bowdenzuges umgebend angeordnet ist.

9. Felgenbremse nach einem der Ansprüchen 1 bis 3, dadurch gekennzeichnet, daß ein Hydraulikzylinder zur Betätigung der Bremsarme vorgesehen ist und daß dessen Kolbenstange sowie Zylindergehäuse entsprechend dem Zugseil und der Hülle eines Bowdenzuges eine Kraftübertragung auf die Bremsarme bewirken.

## FIG. 1

## FIG. 2

# FIG. 3

# FIG. 4